# EUROPÄISCHE PATENTSCHRIFT

(11) **EP 3 322 552 B1**
(45) Veröffentlichungstag und Bekanntmachung des Hinweises auf die Patenterteilung: **30.03.2022**
(21) Anmeldenummer: 16738672.1
(22) Anmeldetag: 11.07.2016
(51) Int. Cl.: B23F 5/06

(54) **VERFAHREN ZUM FEINBEARBEITEN EINER VERZAHNUNG, EINE FEINBEARBEITUNGSMASCHINE ZUR AUSFÜHRUNG DES VERFAHRENS UND EIN COMPUTERPROGRAMM ZUR STEUERUNG DER MASCHINE**
METHOD FOR FINE-PROCESSING A TOOTHING, FINE-PROCESSING MACHINE FOR CARRYING OUT THE METHOD, AND COMPUTER PROGRAM FOR CONTROLLING THE MACHINE
PROCÉDÉ DE FINITION D'UNE DENTURE, MACHINE DE FINITION POUR LA MISE EN UVRE DU PROCÉDÉ ET PROGRAMME INFORMATIQUE POUR LA COMMANDE DE LA MACHINE

(30) Priorität: 14.07.2015 DE 102015009154
(43) Veröffentlichungstag der Anmeldung: 23.05.2018
(73) Patentinhaber: Gleason-Pfauter Maschinenfabrik GmbH, 71636 Ludwigsburg (DE)
(72) Erfinder: SCHNELL, Josef, 85375 Neufahrn b. FS (DE)
(74) Vertreter: Leinweber & Zimmermann
(86) Internationale Anmeldenummer: PCT/EP2016/001192
(87) Internationale Veröffentlichungsnummer: WO 2017/008900

(56) Entgegenhaltungen:
- DE-A1- 3 922 241
- DE-A1- 10 344 945
- DE-C- 606 142
- FR-A- 1 474 505
- US-A- 3 986 305

## Beschreibung

Die Erfindung betrifft ein Verfahren zum Feinbearbeiten einer Verzahnung im Einzelteilverfahren, bei dem man ein scheibenartiges, um seine Drehachse rotierendes Feinbearbeitungswerkzeug in wälzenden Bearbeitungseingriff mit einer Zahnflanke der Verzahnung bringt, um Material von der Zahnflanke abzutragen, wobei im Bearbeitungseingriff ein Linienkontakt hergestellt wird und sich die Kontaktlinie gemäß einer eine zur Verzahnungsachse radiale Richtungskomponente aufweisenden Verschiebung über die Zahnflanke verschiebt, sowie ein zur Ausführung des Verfahrens geeignetes Computerprogramm und eine zur Ausführung des Verfahrens geeignete und gesteuerte Feinbearbeitungsmaschine.

Derartige, im Einzelteilverfahren ausgeführte Feinbearbeitungsverfahren finden beispielsweise beim Schleifen von Schabrädern Anwendung. Im Einzelteilverfahren findet dabei eine Bearbeitung an einer Zahnflanke der bearbeiteten Verzahnung statt, anschließend wird durch Drehung der bearbeiteten Verzahnung um ihre Verzahnungsachse (Weiterteilen) die Zahnflanke des nächsten Zahns in die Bearbeitung verbracht, und so weiter, bis in einem Umlauf die Zahnflanken aller Zähne der Verzahnung an einer Flankenseite bearbeitet sind.

Üblicherweise wird der Abtrag auf das gewünschte Endmaß dabei nicht in einem Umlauf abgeschliffen, sondern der Abschliff erfolgt in mehreren Stufen (Umläufen). In den ersten (Schrupp)-Umläufen erfolgt dabei der größte Materialabtrag, in anschließenden (Schlicht)-Umläufen wird unter Erhöhung der Schleifgenauigkeit weniger Material abgetragen. Nach jedem Umlauf, in dem also ein vorab definierter Betrag abgeschliffen wird, erfolgt eine neuerliche Zustellung, die den Abstand zwischen der zu bearbeitenden Zahnflanke und der Schleifscheibe entsprechend dem für den nächsten Umlauf vorgesehenen Abschliffbetrag verringert. Zudem können nach Erreichen der gewünschten Endgeometrie noch sogenannte "Ausfunkumläufe" durchgeführt werden, die ohne weitergehende Zustellung kraftfrei ausgeführt werden.

Sobald alle Zahnflanken einer Flankenseite, z.B. die linken Flanken nach der vorgesehenen Zahl von Umläufen fertig geschliffen sind, kann die Aufspannung der Verzahnung gelöst werden, die Verzahnung, beispielsweise das Schabrad, umgedreht und erneut aufgespannt werden, woraufhin die Bearbeitung der anderen Flankenseite, dann der rechten, erfolgen kann.

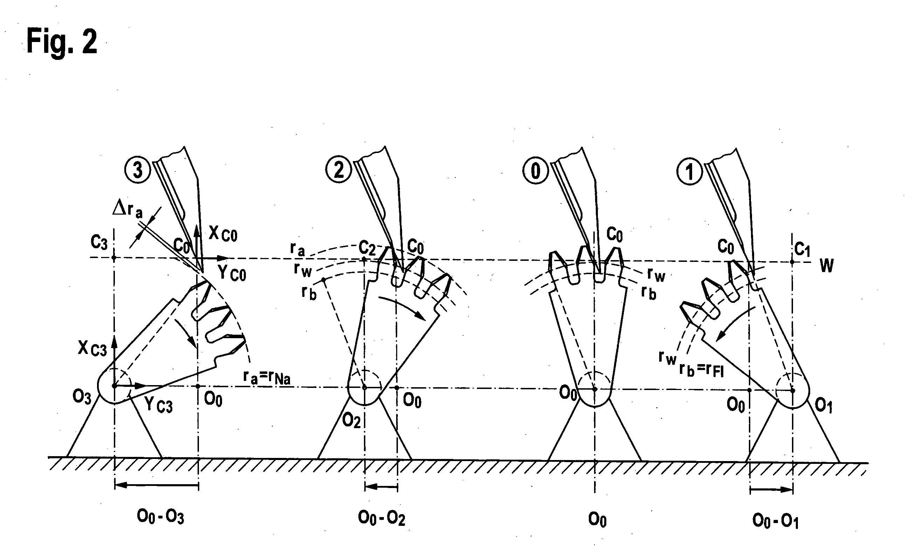

Zur Erzeugung des wälzenden Bearbeitungseingriffes findet dabei nach dem Prinzip der klassischen Abwicklung über einen Rollbogen bei gleichzeitiger translatorischer Verschiebung der Verzahnungsachse statt. Dieses Prinzip ist auf Seite 63 der Firmenschrift "Das SRS-Buch" von Dr. Schriefer, München, Juli 1988, erläutert, wobei die dortige Darstellung dieser Anmeldung als Fig. 2 beigefügt ist und diesbezüglich auf beispielsweise diese Schrift verwiesen wird, allerdings ist dem Fachmann dieses Prinzip ohnehin bestens vertraut. Das Weiterteilen findet dabei in der in Fig. 2 mit 3 bezeichneten Stellung statt, und durch die nachfolgende aufeinander abgestimmte Drehung der Verzahnung nebst Axialbewegung wälzt die Schleifscheibe unter Bildung eines Linienkontakts in die Verzahnung ein. Die Kontaktlinie bewegt sich dabei über die Zahnflanke hinweg, bis die volle Zahnflanke geschliffen ist und (in Stellung 1 in Fig. 2) der Umkehrpunkt für die Linearbewegung zwischen Verzahnung und Schleifscheibe erreicht ist. Im sogenannten Rückhub wird dann die Schleifscheibe wieder aus der Verzahnung hinausbewegt, bis in der wieder erreichten Stellung 3 kein Eingriff mehr besteht. Dort wird die Verzahnung weitergeteilt, woraufhin die Zahnflanke des nächsten Zahns bearbeitet wird. Nach einem Bearbeitungsumlauf erfolgt der nächste Bearbeitungsumlauf dann unter weiterer Zustellung.

Desweiteren ist ein Schleifverfahren (sogenanntes MAAG-Schleifverfahren) bekannt, bei dem anstelle des Linienkontakts ein Punktkontakt zwischen der Verzahnungsevolventenfläche und der Schleifscheibenfläche erzeugt wird, hier wird durch eine zusätzliche Pendelbewegung der Schleifscheibe durch die Zahnlücke entlang der Verzahnungsbreitenrichtung die Zahnflanke auf ihrer gesamten Oberfläche geschliffen.

Demgegenüber sind bei dem Verfahren der eingangs genannten Art nach den erforderlichen grundlegenden Positionier- und Einstellbewegungen außer der für den Wälzeingriff erforderlichen Überlagerung der Drehung der Verzahnung und der translatorischen Hubbewegung über einen ganzen Umlauf hinweg keine Achsbewegungen mehr erforderlich, und es werden dadurch ausgezeichnete Bearbeitungsergebnisse hinsichtlich Bearbeitungsgenauigkeit und Bearbeitungszeit erreicht.

DE 606 142 C offenbart ein Verzahnungsverfahren im Einzelteilverfahren mit Schleifhüben und Leerhüben, bei dem nicht bereits nach einem Schleifhub, sondern erst nach einer größeren Anzahl von Schleifhüben weiter geteilt wird.

DE 103 44 945 A1 offenbart ein Verfahren und eine Maschine zum Schleifen der Zahnflanken von Schabrädern gemäß der oben eingangs erläuterten Verfahrenstechnik, d.h. ein Verfahren gemäß dem Oberbegriff des Anspruchs 1.

FR 1 474 505 A offenbart ein Schleifwerkzeug mit einer Innenkegelfläche und einer verringerten Nebenzeit durch eine besser in den Betrieb integrierbare Abrichtbarkeit der Schleifscheibe. Eine Zickzack-Bewegung bezüglich der Verzahnungsachse findet sowohl während des Schleifhubs als auch während des Rückhubs statt.

Der Erfindung liegt die Aufgabe zugrunde, ein Verfahren der eingangs genannten Art nochmals zu verbessern.

Diese Aufgabe wird von der Erfindung durch eine Weiterbildung eines Verfahrens der eingangs genannten Art gelöst, das im Wesentlichen dadurch gekennzeichnet ist, dass man den Bearbeitungseingriff in noch derselben Teilung unter verringertem tangentialen Abstand zwischen der Zahnflanke und der Scheibenebene des Feinbearbeitungswerkzeugs und unter Vorzeichenumkehr der radialen Richtungskomponente der Kontaktlinienverschiebung fortsetzt. Die Aufgabe wird daher durch das Verfahren gemäß Anspruch 1 gelöst.

Dabei beruht die Erfindung auf der Erkenntnis, dass entgegen der Vorstellung, die erforderlichen Achsbewegungen wie oben beschrieben zu minimieren und aufgrund der minimierten einfachen wiederholten Achsbewegungen eine einfache und zeitsparende Maschinensteuerung umsetzen zu können, durch zusätzliche Achsbewegungen, nämlich einer noch in derselben Teilung den tangentialen Abstand zwischen der Zahnflanke und der Scheibenebene des Feinbearbeitungswerkzeugs reduzierende Extrazustellbewegung eine Verringerung der Bearbeitungszeit erreichen kann. Denn durch Durchführung dieser Bewegung vor der Vorzeichenumkehr der radialen Richtungskomponente der Kontaktlinienverschiebung gelingt ein durch den verringerten tangentialen Abstand bedingter weiterer Bearbeitungseingriff mit einer Kontaktlinienverschiebung unter umgekehrter radialer Richtungskomponente. Der Rückhub erfolgt somit gezielt materialabtragend unter tieferer Zustellung. Dies ermöglicht eine Verringerung der Anzahl der Bearbeitungsumläufe ohne erhöhte Schleifbrandgefahr durch zu hohen Materialabtrag in einem Bearbeitungseingriff.

In einer besonders bevorzugten Ausführungsform wird der tangentiale Abstand für den Bearbeitungseingriff (jeweils) an der nach dem Weiterteilen nächsten Zahnflanke wieder erhöht, insbesondere um den gleichen Betrag wie der der vorherigen Verringerung. Auf diese Weise wird über die einzelnen Zahnlücken der Verzahnung gesehen ein gleichmäßiger Materialabtrag über den Umlauf hinweg erreicht.

Zweckmäßig wird auch bei dem erfindungsgemäßen Verfahren grundsätzlich der Gesamtmaterialabtrag auf ein gewünschtes Endmaß über eine Mehrzahl von Bearbeitungsumläufen der Verzahnung verteilt. Dabei ist bevorzugt vorgesehen, dass die Bearbeitungsfortsetzung unter Verringerung des Tangentialabstands und der Vorzeichenumkehr der radialen Richtungskomponente in der jeweiligen Teilung bei einem oder mehreren, insbesondere den ersten Bearbeitungsumläufen vorgenommen wird. Es ist somit durchaus vorgesehen, dass einzelne Bearbeitungsumläufe auch nach dem oben erläuterten Stand der Technik ausgeführt werden können, insbesondere ist vorgesehen, dass in dem letzten gezielt materialabtragenden Umlauf keine Verringerung des Tangentialabstands vorgenommen wird. Dies ist üblicherweise der letzte Schlichtumlauf und nicht der letzte Umlauf insgesamt, insoweit Ausfunkumläufe vorgesehen werden.

Die Erfindung ist somit nicht so zu verstehen, dass in jedem Bearbeitungsumlauf eine Bearbeitungseingriffsfortsetzung im Rückhub unter weitergehender Zustellung erfolgen muss, vielmehr zeichnet sich das erfindungsgemäße Verfahren dadurch aus, dass diese Maßnahme in wenigstens einem Bearbeitungsumlauf vorgenommen wird.

In einer bevorzugten Variante ist eine Relativbewegung zwischen dem Feinbearbeitungswerkzeug und der Bearbeitung der Verzahnung zur Herstellung des Bearbeitungseingriffes ihrer Art nach die des mechanischen Rollbogens, die aber über synchronisierte CNC-gesteuerte Bewegungsachsen ausgeführt wird. Dies ist die oben bereits erläuterte Überlagerung der tangentialen Hubbewegung mit der Verzahnungsdrehung.

Mit den heute verfügbaren CNC-gesteuerten Maschinenachsen ist es grundsätzlich möglich, eine Relativbewegung zwischen Werkzeug und Verzahnung durch Bewegung der Verzahnung, Bewegung des Werkzeugs oder durch beidseitige Bewegung zu erreichen, und die Erfindung ist diesbezüglich nicht weitergehend eingeschränkt. Besonders bevorzugt wird die Relativbewegung jedoch durch Überlagerung einer Drehbewegung der Verzahnung ihrer Drehachse und einer Linearbewegung der Verzahnung quer zu ihrer Drehachse erzeugt, es bewegt sich somit aktiv die Verzahnung.

In diesem Zusammenhang wird bevorzugt vorgesehen, dass das Feinbearbeitungswerkzeug während eines Bearbeitungsumlaufs der Verzahnung keine anderen Bewegungen als seine Rotationsbewegung ausführt. Bei dieser Variante wird somit die zur Verringerung des tangentialen Abstands vor der Vorzeichenumkehr der radialen Richtungskomponente der Kontaktlinienverschiebung ebenfalls verzahnungsseitig ausgeführt.

In einer zweckmäßigen Ausführungsform ist die bearbeitete Verzahnung die Verzahnung eines zylindrischen Verzahnungswerkzeuges. Hier kommt die mit dem Verfahren erreichbare Genauigkeit geeignet zur Geltung. Das zylindrische Werkzeug könnte z. B. ein Schneidrad (Stoßmesser) sein. Insbesondere ist auch vorgesehen, dass mit dem Verfahren ein Schabrad geschliffen wird.

Zudem wird von der Erfindung unter Schutz gestellt ein Computerprogramm gemäß Anspruch 10, welches, wenn auf einer zur Durchführung eines Verfahrens der oben genannten Art geeigneten Feinbearbeitungsmaschine ausgeführt, die Feinbearbeitungsmaschine zur Ausführung eines Verfahrens der oben genannten Art steuert.

Ebenfalls geschützt wird eine Feinbearbeitungsmaschine gemäß Anspruch 11, insbesondere Schabrad-Schleifmaschine mit einer Steuereinrichtung, die die Maschine zur Durchführung eines Verfahrens nach einem der vorgenannten Verfahrensaspekte steuert. Diese Maschine muss sich hinsichtlich ihrer verfügbaren Bewegungsachsen nicht von bekannten Schabrad-Schleifmaschinen unterscheiden. Allerdings verfügt die Steuerung der Maschine über die zur Ausführung des Verfahrens führenden Steuerbefehle verfügt, die maschinentechnisch implementiert sind.

Weitere Merkmale, Einzelheiten und Vorteile der Erfindung ergeben sich aus der nachfolgenden Beschreibung eines bevorzugten Ausführungsbeispiels mit Bezug auf die beigefügten Figuren, von denen
- Fig. 1: eine Schabrad-Schleifmaschine zeigt,
- Fig. 2: eine erläuternde Wiedergabe der Wälz- und Teilkinematik einer Schabrad-Schleifmaschine zeigt, und
- Fig. 3: eine schematische Darstellung eines erfindungsgemäßen Materialabtrags im Einzelteilverfahren ist.

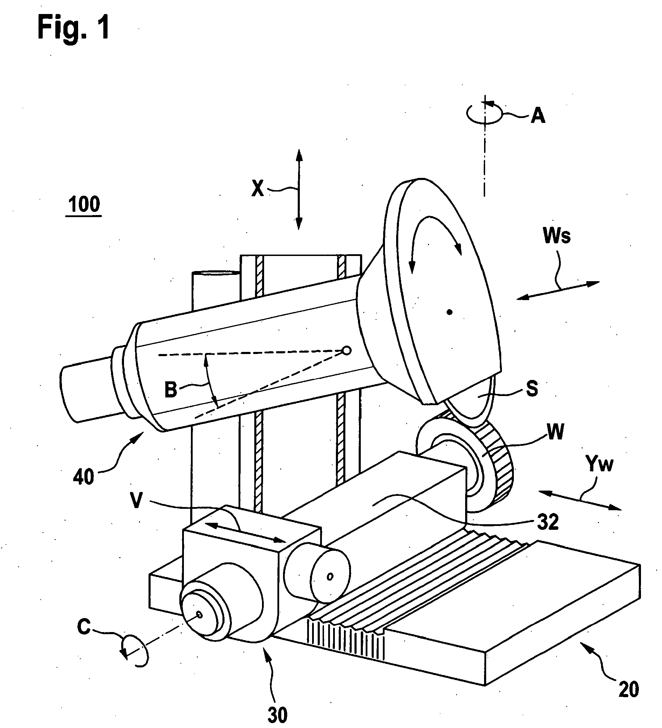

In Fig. 1 ist eine Schabrad-Schleifmaschine 100 dargestellt, deren Hauptkomponenten ein Maschinenbett 20, eine Einheit 30 zur angetriebenen und positionierbaren Lagerung eines Schabrads W und einer Einheit 40 zur angetriebenen und positionierbaren Lagerung einer Schleifscheibe S aufweist. Weitere Nebenkomponenten wie beispielsweise auch eine Abrichteinrichtung sind in Fig. 1 nicht dargestellt.

Das Schabrad W wird drehend angetrieben von einem Werkstückschlitten 32 gehalten, der über die Maschinenachse V entlang des Betts 20 zur tangentialen Hub- und Rückhubbewegung bewegbar ist, während die Rotationsachse des Schabrads mit C bezeichnet ist.

Die Schleifscheibeneinheit 40 hat die um ihre Achse drehbare Schleifscheibe S an einer Schlittenanordnung, wobei eine Höhe der Schleifscheibe über die Positionierachse X und eine Orientierung der Schleifscheibenachse über die rotatorischen Achsen A, B einstellbar ist, wobei die Achse A der Einstellung bezüglich des Schrägungswinkels und die Achse B der Einstellung bezüglich des Eingriffswinkels dient. Zudem kann über Bewegungsachse W_{S} die Zustelltiefe verändert werden.

In Fig. 1 sind Schleifscheibe S und Schabrad W im Bearbeitungseingriff gezeigt, dieser erfolgt nach dem bereits einleitend unter Bezugnahme auf Fig. 2 erläuterten Prinzips der durch Überlagerung der tangentialen Hubbewegung in Richtung Y_{W} mit der Schabrad-Drehung erzeugten Wälzbewegung.

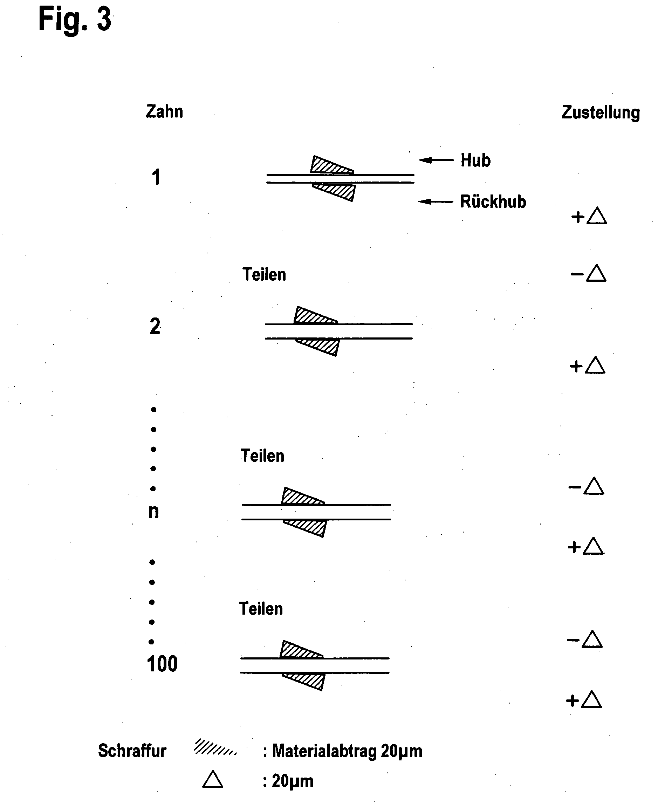

Im folgenden, anhand Fig. 3 beschriebenen Beispielsfall sollen 40 µm Material in einem Umlauf von den Zahnflanken eines z.B. 100 Zähne aufweisenden Schabrads abgenommen werden.

Dies geschieht, indem die Hälfte des gewünschten Abtrags, 20 µm als Zustellbetrag eingestellt werden und dieses Material in der Hubbewegung (+Y_{W}) durch den wälzenden Bearbeitungseingriff abgetragen wird. Noch bevor die Schleifscheibe wieder aus der Eingriffsposition herausgewälzt (-Y_{W}) wird, um Weiterteilen zu können, wird durch Änderung der Zustellung, nämlich eine um weitere 20 um tiefere Zustellung, beim Herauswälzen ebenfalls gezielt ein Materialabtrag vorgenommen.

Bevor die Einwälzbewegung nach der nächsten Weiterteilung beginnt, wird die Zustellung wieder auf die Zustelltiefe beim Hub der vorherigen Teilung eingestellt, wonach der zweite Zahn bearbeitet wird wie der erste, und so weiter. Bei diesem Verfahren werden somit 200 Schleifhübe bei Null Leerhüben ausgeführt, und der Gesamtabtrag von 40 µm in einem Bearbeitungsumlauf erreicht.

Dies ist nur ein veranschaulichendes Beispiel, lässt jedoch erkennen, dass pro Bearbeitungsumlauf mehr Abtrag und damit weniger Umläufe insgesamt möglich (oder bei einer gleichen Anzahl von Bearbeitungsumläufen weniger Abtrag pro Schleifhub nötig ist), um zu den gleichen Bearbeitungsergebnissen wie im Stand der Technik zu gelangen.

Denkt man beispielsweise an die üblicherweise im Stand der Technik vorgenommenen Maßnahmen zum Schleifen eines neu hergestellten Schabrads, bei dem z.B. vier Schruppumläufe, drei Schlichtumläufe und zwei Ausfunkumläufe stattfinden, so genügen bei erfindungsgemäßer Verfahrenssteuerung bereits zwei Schruppumläufe, ein Schlichtumlauf mit Schleifhub im Rückhub und ggf. ein weiterer Schlichtumlauf mit Leerhub im Rückhub, sowie die Ausfunkumläufe. Insgesamt können sich dadurch um durchaus ca. bis zu 25% niedrigere Bearbeitungszeiten ergeben.

Im Ausführungsbeispiel arbeitet eine Schleifscheibe. Die Erfindung lässt sich jedoch auch für Doppelscheibenanordnungen implementieren, bei denen beide Scheiben gleichzeitig zwei um meist einige Zahnlücken beabstandete Zahnflanken bearbeiten.

Die Erfindung ist auch im Übrigen nicht auf die in den vorstehenden Beispielen gezeigten Einzelheiten eingeschränkt.

## Patentansprüche

1. Verfahren zum Feinbearbeiten einer Verzahnung (W) im Einzelteilverfahren, bei dem man ein scheibenartiges, um seine Drehachse rotierendes Feinbearbeitungswerkzeug (S) in wälzenden Bearbeitungseingriff mit einer Zahnflanke der Verzahnung bringt, um Material von der Zahnflanke abzutragen, wobei im Bearbeitungseingriff ein Linienkontakt hergestellt wird und sich die Kontaktlinie gemäß einer eine zur Verzahnungsachse radiale Richtungskomponente aufweisenden Verschiebung über die Zahnflanke verschiebt,
**dadurch gekennzeichnet, dass** man den Bearbeitungseingriff in noch derselben Teilung unter verringertem tangentialen Abstand (+Δ) zwischen der Zahnflanke und der Scheibenebene des Feinbearbeitungswerkzeugs und unter Vorzeichenumkehr der radialen Richtungskomponente der Kontaktlinienverschiebung fortsetzt.

2. Verfahren nach Anspruch 1, bei dem man für den Bearbeitungseingriff an der nach dem Weiterteilen nächsten Zahnflanke den tangentialen Abstand wieder erhöht, insbesondere um den gleichen Betrag wie der der vorherigen Verringerung.

3. Verfahren nach Anspruch 1 oder 2, bei dem der Gesamtmaterialabtrag auf ein gewünschtes Endmaß über eine Mehrzahl von Bearbeitungsumläufen der Verzahnung verteilt ist und die Bearbeitungsfortsetzung unter Verringerung des Tangentialabstands und der Vorzeichenumkehr der radialen Richtungskomponente in der jeweiligen Teilung bei einem oder mehreren, insbesondere den ersten Bearbeitungsumläufen vorgenommen wird.

4. Verfahren nach Anspruch 3, bei dem in einem späteren, insbesondere dem letzten gezielt Material abtragenden Umlauf keine Verringerung des Tangentialabstands vorgenommen wird.

5. Verfahren nach einem der vorhergehenden Ansprüche, bei dem eine Relativbewegung zwischen dem Feinbearbeitungswerkzeug und der bearbeiteten Verzahnung zur Herstellung des Bearbeitungseingriffes ihrer Art nach die des mechanischen Rollbogens ist, die aber über synchronisierte CNC-gesteuerte Bewegungsachsen ausgeführt wird.

6. Verfahren nach Anspruch 5, bei dem die Relativbewegung durch Überlagerung einer Drehbewegung der Verzahnung um ihre Drehachse und einer Linearbewegung der Verzahnung quer zu ihrer Drehachse erzeugt wird.

7. Verfahren nach einem der vorhergehenden Ansprüche, bei dem das Feinbearbeitungswerkzeug während eines Bearbeitungsumlaufs der Verzahnung keine anderen Bewegungen als seine Rotationsbewegung ausführt.

8. Verfahren nach einem der vorhergehenden Ansprüche, bei dem die bearbeitete Verzahnung die Verzahnung eines zylindrischen Verzahnungswerkzeuges ist.

9. Verfahren nach Anspruch 8, bei dem mit dem Verfahren ein Schabrad geschliffen wird.

10. Computerprogramm, welches, wenn auf einer zur Durchführung eines Verfahrens nach einem der vorhergehenden Ansprüche geeigneten Feinbearbeitungsmaschine ausgeführt, die Feinbearbeitungsmaschine zur Ausführung eines Verfahrens nach einem der vorhergehenden Ansprüche steuert.

11. Feinbearbeitungsmaschine (100) mit einer Steuereinrichtung, die die Maschine zur Durchführung eines Verfahrens nach einem der Ansprüche 1 bis 9 steuert.

## Claims

1. A method for the fine-machining of a toothing (W) by means of a single-indexing method, wherein a disc-type fine-machining tool (S) that rotates around its axis of rotation is brought into rolling machining engagement with a tooth flank of the toothing in order to remove material from the tooth flank, wherein a line contact is established while in machining engagement and the contact line moves over the tooth flank in accordance with a movement having a directional component that is radial relative to the toothing axis,
**characterised in that** the machining engagement is maintained in the same pitch with a reduced tangential distance (+Δ) between the tooth flank and the disc plane of the fine-machining tool and with a sign reversal of the radial directional component of the contact line movement.

2. The method in accordance with claim 1, wherein the tangential distance for the machining engagement is increased again on the next tooth flank after the indexing, in particular by the same amount as the previous reduction.

3. The method in accordance with claim 1 or 2, wherein the total amount of material removed to achieve the desired final dimensions is distributed over a plurality of machining cycles of the toothing and machining proceeds in one or more machining cycles, in particular in the first machining cycles, with a reduction in the tangential distance and the sign reversal of the radial directional component in the respective pitch.

4. The method in accordance with claim 3, wherein no further reduction in the tangential distance is undertaken in a later cycle, in particular in the last cycle in which material is removed in a targeted manner.

5. The method in accordance with one of the preceding claims, wherein a relative movement between the fine-machining tool and the machined toothing to establish the machining engagement is by its nature that of a mechanical rolling arc, but it is performed by synchronised CNC-controlled axes of movement.

6. The method in accordance with claim 5, wherein the relative movement is produced by superimposing a rotational movement of the toothing around its axis of rotation and a linear movement of the toothing transversely to its axis of rotation.

7. The method in accordance with one of the preceding claims, wherein the fine-machining tool does not perform any other movements besides its rotational movement during a machining cycle of the toothing.

8. The method in accordance with one of the preceding claims, wherein the machined toothing is the toothing of a cylindrical gear-cutting tool.

9. The method in accordance with claim 8, wherein a shaving cutter is ground using the method.

10. A computer program that, when it is run on a fine-machining machine suitable for performing a method in accordance with one of the preceding claims, controls the fine-machining machine to perform said method in accordance with one of the preceding claims.

11. A fine-machining machine (100) having a controller that controls the machine to perform a method in accordance with one of claims 1 to 9.

## Revendications

1. Procédé de finition d'une denture (W) selon un processus de division individuelle, dans lequel on amène un outil de finition (S) en forme de disque, tournant sur son axe de rotation, à venir en contact d'usinage par génération avec un flanc de dent de ladite denture afin d'enlever de la matière dudit flanc de dent, un contact linéaire étant produit lors du contact d'usinage et la ligne de contact se décalant sur le flanc de dent selon un décalage présentant une composante de direction radiale par rapport à l'axe de la denture,
**caractérisé en ce qu'**on poursuit le contact d'usinage toujours dans la même division avec une distance tangentielle (+Δ) réduite entre le flanc de dent et le plan de disque de l'outil de finition et avec une inversion du signe de la composante de direction radiale du décalage de ligne de contact.

2. Procédé selon la revendication 1, dans lequel on augmente à nouveau la distance tangentielle pour le contact d'usinage sur le flanc de dent suivant, après la division ultérieure, notamment d'une quantité égale à la réduction précédente.

3. Procédé selon la revendication 1 ou 2, dans lequel l'enlèvement total de matière en vue de l'obtention de la dimension finale souhaitée est réparti sur une pluralité de cycles d'usinage de la denture et la poursuite de l'usinage est entreprise avec une réduction de la distance tangentielle et avec ladite inversion du signe de la composante de direction radiale dans la division concernée lors d'un ou de plusieurs cycles d'usinage, notamment lors des premiers cycles d'usinage.

4. Procédé selon la revendication 3, dans lequel aucune réduction de la distance tangentielle n'est entreprise lors d'un cycle ultérieur d'enlèvement ciblé de matière, notamment lors du dernier cycle.

5. Procédé selon l'une quelconque des revendications précédentes, dans lequel un déplacement relatif entre l'outil de finition et la denture usinée visant à produire le contact d'usinage est du même type que celui du diviseur mécanique, lequel est toutefois réalisé par le biais d'axes de déplacement synchronisés à commande numérique par ordinateur (CNC).

6. Procédé selon la revendication 5, dans lequel le déplacement relatif est produit par superposition d'un mouvement de rotation de la denture sur son axe de rotation et d'un déplacement linéaire de la denture transversalement à son axe de rotation.

7. Procédé selon l'une quelconque des revendications précédentes, dans lequel l'outil de finition ne réalise aucun autre déplacement qu'une rotation au cours d'un cycle d'usinage de la denture.

8. Procédé selon l'une quelconque des revendications précédentes, dans lequel la denture usinée est la denture d'un outil cylindrique de taillage de dentures.

9. Procédé selon la revendication 8, ledit procédé permettant de rectifier un galet de rasage.

10. Programme informatique qui, lorsqu'il est mis en œuvre sur une machine de finition adaptée à la réalisation d'un procédé selon l'une des revendications précédentes, commande ladite machine de finition de manière à réaliser un procédé selon l'une des revendications précédentes.

11. Machine de finition (100) dotée d'un dispositif de commande qui commande ladite machine de manière à réaliser un procédé selon l'une des revendications 1 à 9.
